# EUROPEAN PATENT SPECIFICATION

(11) **EP 1 626 162 B1**
(45) Date of publication and mention of the grant of the patent: **20.01.2010**
(21) Application number: 05253604.2
(22) Date of filing: 10.06.2005
(51) Int. Cl.: F01D 5/18

(54) **Temperature tolerant vane assembly**
Temperaturtolerante Leitschaufelanordnung
Ensemble d'aubes tolérant la température

(30) Priority: 11.08.2004 US 916682
(43) Date of publication of application: 15.02.2006
(73) Proprietor: United Technologies Corporation, Hartford, CT 06101 (US)
(72) Inventor: Harding, Benjamin R., Ellington, CT 06029 (US); Hudson, Eric A., Harwinton, CT 06791 (US)
(74) Representative: Leckey, David Herbert

(56) References cited:
- EP-A- 1 052 373
- EP-A- 1 284 338
- FR-A- 1 483 484
- GB-A- 2 386 926
- US-A- 4 314 794
- US-A- 4 798 515

## Description

### Technical Field

This invention relates to a vane assembly of the type useful in gas turbine engines, and particularly to a vane assembly including a tensioned baffle assembly that applies a compressive load to the vane.

### Background of the Invention

Fluid directing vanes, such as those used in the turbine modules of gas turbine engines, are exposed to hot, gaseous combustion products. Various measures are taken to protect the vanes from the damaging effects of the hot gases. These include making the vane of temperature tolerant nickel or cobalt alloys, applying thermal barrier coatings to the vanes, and cooling the vanes with relatively cool, pressurized air extracted from the engine compressor.

Conventional cooling techniques include impingement cooling. An impingement cooled vane has an internal cavity and a sheet metal coolant insert or baffle residing in the cavity but spaced a small distance from the cavity wall. The space between the baffle and the cavity wall is referred to as an impingement space. The baffle, which is usually made of a nickel alloy, is welded to the vane near the spanwise extremities of the vane. The weld joint secures the baffle to the vane and also seals the spanwise extremities of the impingement cavity. Numerous impingement cooling holes perforate the baffle. During engine operation, coolant enters the interior of the baffle and then flows through the impingement cooling holes, which divide the coolant into a multitude of high velocity coolant jets. The coolant jets impinge on the cavity wall to keep the wall cool. The coolant then discharges from the impingement cavity, customarily by way of coolant discharge passages that penetrate the cavity wall.

Despite the many merits of the above mentioned alloys, coatings and cooling techniques, it is desirable to further improve the temperature tolerance of turbine engine vanes to extend their useful life or to allow the engine to operate at higher internal temperatures, which improves engine performance. One way to improve the temperature tolerance is to construct the vanes of a refractory material. Refractory materials include refractory metal alloys (such as molybdenum and niobium alloys) ceramics, and compositions comprising intermetallic compounds. However these materials are susceptible to cracks because they are brittle at some or all temperatures.

In addition, although refractory materials exhibit better temperature tolerance than nickel or cobalt alloys, it may still be necessary to employ impingement cooling using a conventional metal baffle as already described. A conventional metal baffle is desirable, even in a vane made of refractory material, for at least two reasons. First, conventional baffle alloys have a higher coefficient of thermal expansion than do the refractory materials, but are exposed to lower temperatures during engine operation. Consequently, the thermal response of the conventional metal baffle will be compatible with that of the refractory vane. Second, a conventional metal baffle, unlike a refractory baffle, can be perforated with impingement cooling holes without suffering any appreciable loss of structural integrity. Unfortunately, a conventional metal coolant baffle cannot be welded to a refractory vane in order to secure the baffle to the vane and seal the ends of the impingement cavity. In principle, the problem of sealing the ends of the impingement cavity could be overcome by using a seal made of a compliant material. In practice, however, such seals are incapable of withstanding the extreme temperatures and/or the mechanical abuse (e.g. vibration and chafing) encountered in a turbine engine. Moreover, even if a suitable seal material were available, it would not, by itself, address the problem of securing the metal baffle to the ceramic vane.

What is needed is a coolable, highly temperature tolerant vane assembly that exhibits good crack resistance, is capable of accepting a metal baffle, and is achievable without requiring the use of materials unsuitable for a harsh thermal and mechanical environment.

GB-A-2386926 discloses a turbine blade according to the preamble of claim 1. FR-A-1483484 discloses a turbine blade having a baffle extending the length of a cavity of the blade. One end of the baffle is closed by a cap while the other end is hermetically sealed to a blade opening by a collar. US-A-4798515 discloses a turbine vane having baffle members which are positioned relative to each other by a positioning pin. US-A-4314794 discloses a multielement turbine blade held together by a tie tube which receives coolant. EP-A-1284338 discloses a multi-baffle turbine nozzle construction.

### Summary of the Invention

According to the present invention there is provided a vane assembly as claimed in claim 1,

The tensile load applied to the baffles helps anchor the baffles to the vane and effect a seal between the baffles and the vane. The compressive load applied to the vane helps optimize the stress distribution to compensate for any brittleness in the material used to make the vane.

A fastener connects the baffles to each other.
In a more preferred embodiment of the invention, the baffles are relatively flexible in comparison to the fastener. The fastener applies a tensile load that anchors the baffles to the vane and also deflects the baffles to effect a seal between the baffles and the vane.

The foregoing and other features of the various embodiments of the invention will become more apparent from the following description of the best mode for carrying out the invention and the accompanying drawings.

### Brief Description of the Drawings

Figure **1** is a cross sectional side elevation view of a turbine vane assembly for a turbine engine.
Figure **2** is an exploded perspective view of the vane assembly of Fig. **1** showing a vane, a pair of baffles and a fastener assembly.
Figure **3** is a view in the direction **3-3** of Fig. **2****.**
Figure **4** is a view showing the remote ends of flexible baffles as initially placed in the vane but before having been connected to each other.
Figure **5** is a view showing the remote ends of flexible baffles connected to and in contact with each other.
Figure **6** is a view similar to Figure **5** showing an alternate configuration with the baffles connected to each other but out of contact with each other.
Figure **7** is a view similar to Figure **5** showing various flexible fasteners useful for connecting relatively rigid baffles to each other.
Figure **8** is a seal suitable for being interposed between the vane and baffles in an alternate embodiment of the invention.

### Preferred Embodiments of the Invention

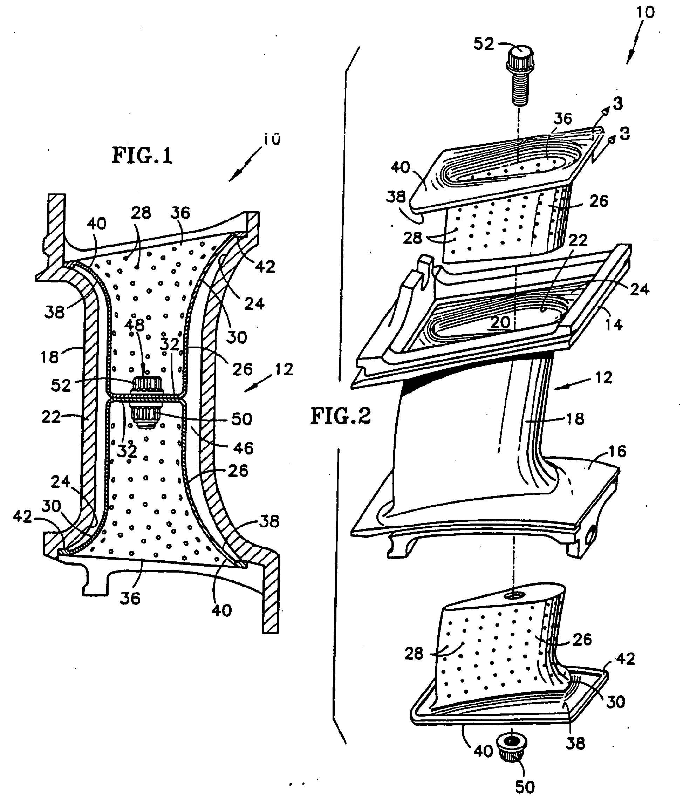

Referring to Figures **1-3** a vane assembly **10** for a turbine engine includes a vane **12** having a first or radially outer platform **14** and a second or radially inner platform **16.** The identification of the platforms as radially outer and inner platforms reflects the orientation of the vane when installed in a turbine module of a gas turbine engine. An airfoil **18** extends spanwisely between the platforms. An airfoil shaped internal cavity **20** bounded by vane wall **22** extends spanwisely through the airfoil. The cavity has flared portions **24** at its spanwise extremities as seen best in Fig. **1****.** The vane is made of a refractory material such as a refractory metal alloy, a ceramic, or a composition comprising intermetallic compounds.

A metal baffle assembly includes first and second (radially outer and inner) baffles **26** each made of a nickel base alloy. Numerous impingement holes **28** perforate the baffles. Each baffle is airfoil shaped along most of its spanwise length and also has a flared proximal end **30,** similar in shape to the flared portions **24** of the vane cavity, and a squared-off remote end **32.** A coolant inlet **36** permits coolant to flow into the interior of each baffle. Each flared end **30** has an inboard surface **38** and an outboard surface **40** that face respectively toward or away from the cavity **20** when the baffle is installed in the vane. A raised border **42** extends around the perimeter of each inboard surface **38.** The raised border may be formed in any suitable way, for example as an integral feature of the baffle or as a coating of prescribed thickness applied locally to the perimeter of the inboard surface. In a finished vane assembly, the baffles nest inside the vane cavity **20** as seen best in Fig. **1** with the baffle proximal ends **30** proximate the spanwise extremities of the vane and the baffle remote ends **32** remote from the spanwise extremities. The borders **42** contact the flared portion of the cavity. The baffles cooperate with vane wall **22** to define an impingement cavity **46** that circumscribes the baffles.

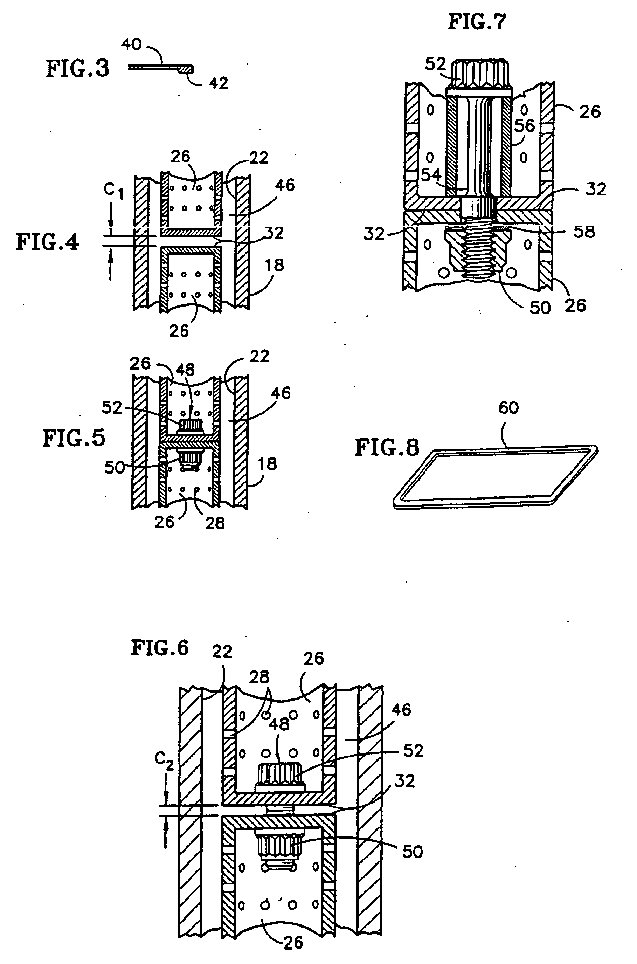

A fastener **48,** such as a nut and bolt assembly, connects the baffles to each other. One embodiment of the invention includes sheet metal baffles that are relatively flexible in comparison to the fastener, which is relatively rigid in comparison to the baffles. When the baffles are initially placed in the airfoil cavity, the baffle remote ends **32** are spanwisely spaced from each other by an inter-baffle clearance space C₁ (Fig. **4**). However when nut **50** is torqued onto bolt **52,** the baffle deflects, particularly at the flared proximal end **30,** until the remote ends **32** contact each other as seen in Figures **1** and **5****.** As a result, the fastener applies a spanwisely directed tensile load to the baffle assembly which, in turn, applies a spanwisely directed compressive load to the vane. The magnitude of the tensile and compressive loads can be accurately regulated by appropriate choice of baffle material, thickness and geometry and by the initial inter-baffle clearance space **C₁.** Alternatively, the nut may be torqued onto the bolt only enough to reduce the interbaffle clearance from initial value **C₁** to a prescribed non-zero value **C₂** as seen in Fig. **6****.** This variant of the invention is believed to result in less accurate control of the tensile and compressive loads because those loads depend in part on the difference between **C₁** and **C₂,** a difference that may be difficult to control in practice.

Figure **7** illustrates an alternative embodiment in which the baffles are relatively rigid in comparison to the fastener, which is relatively flexible in comparison to the baffles. In this embodiment the remote ends **32** of the baffles may be in contact with each other as seen in Fig. **7** or may be out of contact with each other so that an interbaffle space is present even after the fastener is tightened. The illustration depicts three ways for introducing flexibility into a fastener comprising a nut and bolt assembly. First, the shank of bolt **52** may be flexible enough to elastically deform in response to torque applied to the fastener. The deformability of the bolt may be enhanced by employing a neck **54** of reduced cross sectional area. Second, an elastically deformable spacer **56** may be interposed between the nut and/or bolt and the baffle. Third, a wave washer **58** or other suitable spring device may be interposed between the nut and/or bolt and the baffle. Although Figure **7** depicts all these features, they would ordinarily be used individually, not in combination.

During engine operation, coolant enters each of the coolant inlets **36,** flows through the impingement holes **28** and impinges on the vane wall **22** to impingement cool the vane. The coolant then discharges from the impingement cavity by way of coolant outlets, not shown, which customarily take the form of passages that penetrate the vane wall **22.**

With the most salient features having now been described, other features and options may now be better appreciated.

Because the illustrated baffles **26** are of approximately equal spanwise length, their remote ends **32** and the fastener **48** reside at approximately the mid-span of vane cavity **20.** However unequal baffle lengths and other spanwise locations of the fastener may also be satisfactory.

The illustrated embodiments employ a nut and bolt assembly as a fastener for connecting the baffles to each other. However other types of fasteners such as rivets, weld joints or braze joints may also be employed.

In an alternative design, an individual spacer **60** as depicted in Fig. **8** may be used in lieu of a raised border **42** along the perimeter of each inboard surface. In yet another embodiment neither an individual spacer nor a raised border is present, substantially eliminating at least part of the impingement cavity **46** near the spanwise extremities of the airfoil.

The disclosed vane assembly has several advantages. First, the tensile load applied to the baffle assembly securely anchors the baffle assembly to the vane without a weld joint. The corresponding compressive load exerted on the vane improves the stress distribution in the vane by mitigating the tensile stresses. This makes the vane less vulnerable to cracking and helps ensure the integrity of the vane if cracking nevertheless occurs. As a result, the vane can be made of temperature tolerant but brittle refractory materials. The tensile load applied to the baffle assembly also seals the spanwise extremities of the impingement cavity **46** to prevent coolant from entering the cavity without first passing through the impingement holes. Moreover, this seal is effected without using seal materials unable to tolerate the vibration, chafing and extended exposure to high temperatures.

Another advantage is best appreciated by first referring to US Patents 3,378,228 and 4,314,794, both of which disclose a multi-element ceramic vane with a hollow tube tensioned by a nut secured thereto. The tensile force is reacted out as a compressive force exerted on the vane. Coolant, which is not disclosed as being for impingement cooling, flows through the hollow tube. In both constructions, the coolant must flow past the location of the nut. As a result, the inner diameter of the nut constrains the area of the tube and thus the quantity of coolant that can enter the tube. In principle, a larger nut could be used, however this is frequently impractical in turbine engines or other applications where space is at a premium. By contrast, the fastener **48** of the present invention resides at a location past which coolant is not required to flow. Accordingly, the area of the coolant inlet is not constrained by the maximum acceptable fastener size.

Although this invention has been shown and described with reference to a specific embodiment thereof, it will be understood by those skilled in the art that various changes in form and detail may be made without departing from the invention as set forth in the accompanying claims.

## Claims

1. A vane assembly (10), comprising:
a vane (12) having first and second ends and an internal cavity (20);
a baffle assembly including a first baffle (26) extending into the cavity (20) from the first end and a second baffle (26) extending into the cavity (20) from the second end; **characterised in that**
a fastener (48) connects said first baffle (26) to said second baffle (26) thereby applying a tensile load to the baffle assembly which, in turn, applies a compressive load to the vane (12) .

2. The vane assembly of claim **1** wherein a fastener (48) connecting the baffles (26) to each other is relatively rigid and the baffles (26) are relatively flexible.

3. The vane assembly of claim **2** wherein each baffle (26) has a proximal end (30) and a remote end (32) and the fastener (48) fastens the baffles (26) to each other so that the remote ends (32) are brought into contact with each other.

4. The vane assembly of claim **2** or **3** wherein the fastener (48) is a nut and bolt.

5. The vane assembly of claim 1 wherein a fastener (52) for connecting the baffles (26) to each other is relatively flexible and the baffles (26) are relatively rigid.

6. The vane assembly of claim **5** wherein the fastener includes at least one of a deformable bolt (52), a deformable spacer (56), a spring device and a wave washer (58).

7. The vane assembly of claim 6 wherein the bolt (52) has a neck (54).

8. The vane assembly of any of claims **1** to **4** wherein the baffles (26) are made of a relatively flexible material and the vane (12) is made of a relatively brittle material.

9. The vane assembly of claim **8** wherein the baffles (26) are made of a nickel base alloy and the vane (12) is made of a refractory material.

10. The vane assembly of claim **9** wherein the refractory material is selected from the group consisting of refractory metal alloys including molybdenum and niobium alloys, ceramics, and compositions comprising intermetallic compounds.

11. The vane assembly of any preceding claim, wherein each baffle (26) includes a flared proximal end (30).

12. The vane assembly of claim **11** including first and second vane platforms (14, 16) and a spacer (42) residing between the flared proximal end (30) of at least one of the baffles (26) and its respective vane platform (14,16).

13. The vane assembly of claim **11** or **12** wherein the flared proximal ends (30) of the baffles (26) deflect under the influence of a or said fastener (48; 52) fastening said baffles to each other, thereby applying said tensile load to the baffles (26) and said compressive load to the vane (12).

14. The vane assembly of any preceding claim wherein the baffles (26) contact each other within the cavity (20).

15. The vane assembly of any preceding claim wherein impingement holes (28) perforate the baffles (26).

16. The vane assembly of any preceding claim wherein the vane (12) is made of a refractory material.

## Patentansprüche

1. Schaufelanordnung (10) aufweisend:
eine Schaufel (12) mit einem ersten und einem zweiten Ende und einem inneren Hohlraum (20);
eine Leitflächenanordnung mit einem ersten Leitflächenelement (26), das sich vom ersten Ende in den Hohlraum (20) hinein erstreckt, und mit einem zweiten Leitflächenelement (26), das sich vom zweiten Ende in den Hohlraum (20) hinein erstreckt, **dadurch gekennzeichnet, dass**
ein Befestigungselement (48), welches das erste Leitflächenelement (26) mit dem zweiten Leitflächenelement (26) verbindet und dabei eine Zugbelastung auf die Leitflächenanordnung ausübt, die wiederum eine Kompressionsbelastung auf die Schaufel (12) ausübt.

2. Schaufelanordnung nach Anspruch 1, in der ein Befestigungselement (48), das die Leitflächenelemente (26) miteinander verbindet, relativ starr ist und die Leitflächenelemente (26) relativ flexibel sind.

3. Schaufelanordnung nach Anspruch 2, wobei jedes Leitflächenelement (26) ein proximales Ende (30) und ein entferntes Ende (32) hat und das Befestigungselement (48) die Leitflächenelemente (26) aneinander befestigt, so dass die entfernten Enden (32) in Kontakt miteinander gebracht werden.

4. Schaufelanordnung nach Anspruch 2 oder 3, wobei das Befestigungselement (48) aus einer Mutter und einem Bolzen besteht.

5. Schaufelanordnung nach Anspruch 1, wobei ein Befestigungselement (52) zum Befestigen der Leitflächenelemente (26) aneinander relativ flexibel ist und die Leitflächenelemente (26) relativ starr sind.

6. Schaufelanordnung nach Anspruch 5, wobei das Befestigungselement wenigstens einen deformierbaren Bolzen (52), einen deformierbaren Abstandshalter (56), eine Federvorrichtung und eine Wellenscheibe (58) aufweist.

7. Schaufelanordnung nach Anspruch 6, wobei der Bolzen (52) eine Verjüngung (54) hat.

8. Schaufelanordnung nach einem der Ansprüche 1 bis 4, wobei die Leitflächenelemente (26) aus einem relativ flexiblen Material gemacht sind und die Schaufel (12) aus einem relativ spröden Material gemacht ist.

9. Schaufelanordnung nach Anspruch 8, wobei die Leitflächenelemente (26) aus einer nickelbasierten Legierung gemacht sind und die Schaufel (12) aus einem hitzebeständigen Material gemacht ist.

10. Schaufelanordnung nach Anspruch 9, wobei das hitzebeständige Material aus der Gruppe ausgewählt ist, die aus hitzebeständigen Metalllegierungen einschließlich Molybdän- und Nioblegierungen, Keramiken und Mischungen, die intermetallische Verbindungen enthalten, besteht.

11. Schaufelanordnung nach einem der vorangehenden Ansprüche, wobei jedes Leitflächenelement (26) ein gebördeltes proximales Ende (30) aufweist.

12. Schaufelanordnung nach Anspruch 11 mit einer ersten und einer zweiten Schaufelplattform (14, 16) und einem Abstandshalter (42), der sich zwischen dem gebördelten proximalen Ende (30) von wenigstens einem der Leitflächenelemente (26) und der zugehörigen Schaufelplattform (14, 16) befindet.

13. Schaufelanordnung nach Anspruch 11 oder 12, wobei sich die gebördelten proximalen Enden (30) der Leitflächenelemente (26) unter dem Einfluss eines oder des Verbindungselements (48; 52), das die Leitflächenelemente miteinander verbindet, verwinden und dadurch die Zugbelastung auf die Leitflächenelemente (26) und die Kompressionsbelastung auf die Schaufel (12) ausüben.

14. Schaufelanordnung nach einem der vorangehenden Ansprüche, wobei die Leitflächenelemente (26) einander innerhalb des Hohlraums (20) berühren.

15. Schaufelanordnung nach einem der vorangehenden Ansprüche, wobei Aufpralllöcher (28) die Leitflächenelemente (26) perforieren.

16. Schaufelanordnung nach einem der vorangehenden Ansprüche, wobei die Schaufel (12) aus einem hitzebeständigen Material gemacht ist.

## Revendications

1. Ensemble d'aube (10), comprenant :
une aube (12) comportant des première et seconde extrémités et une cavité interne (20) ;
un ensemble de déflecteurs comprenant un premier déflecteur (26) s'étendant dans la cavité (20) depuis la première extrémité et un second déflecteur (26) s'étendant dans la cavité (20) depuis la seconde extrémité ; **caractérisé en ce que**
un dispositif de fixation (48) raccorde ledit premier déflecteur (26) audit second déflecteur (26) appliquant ainsi une charge de traction à l'ensemble de déflecteurs qui, lui-même, applique une charge de compression à l'aube (12).

2. Ensemble d'aube selon la revendication 1, dans lequel un dispositif de fixation (48) raccordant les déflecteurs (26) l'un à l'autre est relativement rigide et les déflecteurs (26) sont relativement flexibles.

3. Ensemble d'aube selon la revendication 2, dans lequel chaque déflecteur (26) comporte une extrémité proximale (30) et une extrémité éloignée (32) et le dispositif de fixation (48) fixe les déflecteurs (26) l'un à l'autre de sorte que les extrémités éloignées (32) sont amenées en contact l'une avec l'autre.

4. Ensemble d'aube selon la revendication 2 ou 3, dans lequel le dispositif de fixation (48) est du type écrou et boulon.

5. Ensemble d'aube selon la revendication 1, dans lequel un dispositif de fixation (52) pour raccorder les déflecteurs (26) l'un à l'autre est relativement flexible et les déflecteurs (26) sont relativement rigides.

6. Ensemble d'aube selon la revendication 5, dans lequel le dispositif de fixation comprend au moins un boulon déformable (52), un espaceur déformable (56), un dispositif de ressort et une rondelle ondulée (58).

7. Ensemble d'aube selon la revendication 6, dans lequel le boulon (52) comporte un collet (54).

8. Ensemble d'aube selon l'une quelconque des revendications 1 à 4, dans lequel les déflecteurs (26) sont constitués d'un matériau relativement flexible et l'aube (12) est constituée d'un matériau relativement fragile.

9. Ensemble d'aube selon la revendication 8, dans lequel les déflecteurs (26) sont constitués d'un alliage à base de nickel et l'aube (12) est constituée d'un matériau réfractaire.

10. Ensemble d'aube selon la revendication 9, dans lequel le matériau réfractaire est sélectionné dans le groupe consistant en des alliages de métaux réfractaires incluant des alliages de molybdène et de niobium, des céramiques et des compositions comprenant des composés intermétalliques.

11. Ensemble d'aube selon l'une quelconque des revendications précédentes, dans lequel chaque déflecteur (26) comprend une extrémité proximale évasée (30).

12. Ensemble d'aube selon la revendication 11, comprenant des première et seconde plates-formes d'aube (14, 16) et un espaceur (42) situés entre l'extrémité proximale évasée (30) d'au moins l'un des déflecteurs (26) et sa plate-forme d'aube (14, 16) respective.

13. Ensemble d'aube selon la revendication 11 ou 12, dans lequel les extrémités proximales évasées (30) des déflecteurs (26) subissent une déflexion sous l'influence d'un ou dudit dispositif de fixation (48 ; 52) fixant lesdits déflecteurs l'un à l'autre, appliquant ainsi ladite charge de traction aux déflecteurs (26) et ladite charge de compression à l'aube (12).

14. Ensemble d'aube selon l'une quelconque des revendications précédentes, dans lequel les déflecteurs (26) sont en contact les uns avec les autres dans la cavité (20).

15. Ensemble d'aube selon l'une quelconque des revendications précédentes, dans lequel des trous d'impact (28) perforent les déflecteurs (26).

16. Ensemble d'aube selon l'une quelconque des revendications précédentes, dans lequel l'aube (12) est constituée d'un matériau réfractaire.
